# EUROPEAN PATENT SPECIFICATION

(11) **EP 3 159 234 B1**
(45) Date of publication and mention of the grant of the patent: **27.04.2022**
(21) Application number: 16192016.0
(22) Date of filing: 22.11.2012
(51) Int. Cl.: B60W 30/18, B60W 20/00, B60K 6/48, B60W 10/02

(54) **HYBRID ELECTRIC VEHICLE AND METHOD OF CONTROL THEREOF**
ELEKTRISCHES HYBRIDFAHRZEUG UND STEUERUNGSVERFAHREN DAFÜR
VÉHICULE ÉLECTRIQUE HYBRIDE ET SON PROCÉDÉ DE CONTRÔLE

(30) Priority: 22.11.2011 GB 201120114
(43) Date of publication of application: 26.04.2017
(62) Divisional of application: 12801490.9
(73) Proprietor: Jaguar Land Rover Limited, Coventry, Warwickshire CV3 4LF (GB)
(72) Inventor: Birch, John, Coventry, Warwickshire CV3 4LF (GB); Brant, Adam, Coventry, Warwickshire CV3 4LF (GB); Bureau, Baptiste, Coventry, Warwickshire CV3 4LF (GB)
(74) Representative: Holmes, Matthew William

(56) References cited:
- EP-B1- 2 269 882
- DE-A1- 4 133 059
- DE-A1-102009 055 062
- DE-B4-102007 061 895
- US-A1- 2003 160 455
- US-A1- 2008 305 923
- US-A1- 2008 314 663
- US-A1- 2009 277 704

## Description

### FIELD OF THE INVENTION

The present invention relates to hybrid electric vehicles. In particular, but not exclusively, the invention relates to a plug-in hybrid electric vehicle and to a method of operation of a plug-in hybrid electric vehicle. Aspects of the invention relate to a system, to a method and to a vehicle.

### BACKGROUND

It is known to provide a hybrid electric vehicle (HEV) having an engine and at least one electric motor powered by a battery. The engine is operable to drive a generator to generate charge to recharge the battery. The electric motor is operable to drive the vehicle in an electric vehicle (EV) mode. In the case of a parallel HEV, the electric motor and engine are operable to provide torque to drive the vehicle simultaneously.

The electric motor and electric generator may be provided by a single electric machine or by separate respective electric machines.

Some HEVs are provided with external charging functionality whereby the battery may be recharged by an external power source. Such vehicles will be referred to herein as plug-in hybrid electric vehicles or PHEVs

If some known PHEVs, if whilst in EV mode the value of torque demanded by the driver (by depression of an accelerator pedal) exceeds that which the electric motor can provide alone, the engine may be restarted in order to meet the torque demand. Thus the engine may be employed to provide 'torque boost' to the vehicle in parallel with torque from the electric motor. If the driver depresses the accelerator pedal beyond a prescribed amount the engine may be restarted automatically to provide torque boost.

It is to be understood that a driving pattern of some drivers of PHEVs may be such that the battery is regularly recharged from an external source and the vehicle operated exclusively in electric vehicle (EV) mode. Thus the engine may not be started for a period of several weeks or even months. This usage pattern may be particularly common in an inner-city environment, especially where emissions control is of concern.

Such an extended period of time between engine starts may be problematic for a number of reasons. Internal components of the engine (such as a starter motor stator) may experience an accelerated rate of corrosion and/or wear due to the loss over time of a residual oil film thereon. Cam lobes and tappets may be particularly vulnerable since they may be fabricated from a non-stainless steel and therefore corrode relatively rapidly in the absence of a protective oil film.

US2008/0314663A1 describes a method of generating brake force to decelerate a vehicle. The vehicle includes an internal combustion engine coupled to an input of a first electric energy device, the first electric energy device having an output coupled to a transmission device, and a second electric energy conversion device coupled downstream of the transmission device, the first and second electric energy conversion devices being powered at least by a battery. The method includes during a deceleration condition, generating brake torque via the second electric energy conversion device to generate electric energy storable in the battery; and rotating the internal combustion engine via torque output from the first electric energy device to deplete electric energy from the battery.

US2003/0160455A1 describes a hybrid powertrain including an internal combustion engine, a regenerative brake/motor and an electric energy storage device such as a battery. The internal combustion engine has programmable injection events and programmable intake and exhaust valve events. The regenerative brake/motor is capable of operating as both an electric generator and as an electric motor. The battery receives electric energy from the regenerative brake. In additional to supplying electricity to the motor, the battery drives the engine accessories. The battery also supplies electric energy to keep the exhaust aftertreatment systems (Lean NOx, NOx absorber, PM Filter) at optimal temperature to improve conversion efficiency. A powertrain controller schedules the energy distribution and driving forces associated with both the diesel engine and the motor to maximize the vehicle fuel economy and to minimize the vehicle exhaust emissions.

It is an aim of embodiments of the present invention to at least partially mitigate the disadvantages of known HEVs.

### STATEMENT OF THE INVENTION

Aspects of the invention provide a system, a vehicle and a method as claimed in the appended claims.

It is to be understood that by motoring of the engine is meant that the engine is turned over by means of a torque applied to the engine without starting the engine, i.e. without burning fuel to power the engine. Motoring may be for part of a revolution of the engine, for a full revolution or more than one revolution. Motoring may be for a relatively large number of revolutions, for example more than 10 revolutions in some embodiments.

The feature that that engine is forced to rotate has the advantage that lubrication of one or more components of the engine may be effected thereby to reduce a risk of deterioration of the engine due to being stationary, for example due to being stationary for an extended period of time. Furthermore, warming of the engine may take place due to frictional forces, providing improved emissions performance and fuel economy when it is required to use the engine.

It is to be understood that frequent starting of the engine (rather than performing engine turnover without starting) in order to counter these problems may be undesirable. For example, frequent starting of the engine may cause a driver to become confused since the reason for engine starting may not be apparent to the driver. Furthermore, the vehicle may be used in a zero-emission zone in which an engine start is prohibited.

Embodiments of the present invention may be employed to solve a number of problems associated with known HEVs. For example, relatively fast, trouble-free engine starting in response to a driver tip-in request may be difficult to achieve if an engine has not been used for some time. This may be due for example to a lack of fuel pressure in a fuel rail and/or a lack of knowledge by an engine controller or powertrain control module (PCM) of the rotational position of the crankshaft.

Some embodiments of the invention have the feature that fuel pressure in a fuel rail may be restored to a value that is above a prescribed value each time engine turnover is performed.

In line with the invention, the controller determines the crankshaft position whilst the engine is being turned over and a value of crankshaft position so determined may be stored in a memory thereof.

Embodiments of the invention may have the further advantage that problems associated with ageing of engine fluids (such as engine oil, engine coolant and fuel) and/or moisture-ingress if the engine fluids are allowed to remain static at ambient temperature may be reduced or eliminated.

It is to be understood that lack of engine starting in cold climatic conditions can exacerbate the above problems and result in further problems such as build-up of ice in an engine breather system.

Embodiments of the present invention overcome at least some of these problems by performing automatically an engine turnover operation in which the engine is forced to rotate without being started.

A further problem associated with not starting an engine for a period of time is that the PCM may be unable to undertake one or more diagnostic tests that would normally be performed on a powertrain of the vehicle if the engine were started. Consequently the PCM is unable fully to verify correct operation of the engine and provide a prior warning to the driver of a problem with the engine that would otherwise be identified. It is to be understood that by performing engine turnover on a regular basis without starting the engine, the PCM may be able to perform one or more further diagnostic tests and thereby alert a driver to an engine problem without being required to start the engine.

As discussed below, in some embodiments engine turnover is performed by connecting the engine to one or more wheels of the vehicle by means of a driveline. This allows the engine to be employed to provide brake torque to the driveline. This may advantageously permit simulation of engine overrun torque and/or facilitate a reduction in the use of friction braking. It may be particularly useful in circumstances where an amount of available regenerative braking torque is reduced or substantially zero. This may occur for example when a traction battery has a relatively high state of charge (SoC) or when an electric machine associated with the regenerative braking system has reduced torque generating capacity.

According to the invention, the vehicle is operable to perform at least one diagnostic test when the engine is rotated without starting in EV mode.

The control system is operable to recalibrate a rotational position of the crankshaft when the engine is rotated without starting.

The vehicle may be operable to increase a pressure of fuel in a fuel supply line of the engine when the engine is rotated without starting.

In an embodiment, the vehicle is operable by the control system to apply torque to the engine to motor the engine without starting the engine by means of an engine starter motor.

In an embodiment, the vehicle is operable by the control system to apply torque to the engine to motor the engine without starting the engine by means of the at least one electric machine.

Optionally the vehicle is operable by the control system to motor the engine without starting the engine by coupling the engine to a driveline of the vehicle whilst the vehicle is moving.

By performing engine turnover whilst the vehicle is moving, NVH associated with engine turnover may be masked at least in part by vehicle road noise.

Advantageously the control system may be operable to cause the engine to rotate without starting (i.e. to be turned over or motored) thereby to cause braking of the vehicle. Thus the engine may be employed to provide useful braking due to compression of gases in cylinders thereof and/or frictional or inertial forces thereby to slow the vehicle. In some embodiments the engine is connected to the driveline of the vehicle, for example by means of a clutch, in order to cause braking of the vehicle. The engine may be coupled to the driveline by fully closing the clutch. In some embodiments the engine may be coupled to the driveline by partially closing (slipping) the clutch.

This feature has the advantage that noise, vibration or harshness (NVH) induced due to rotation of the engine may be masked by the braking action provided by the engine. The braking action may be provided in addition to or instead of one or more other braking means of the vehicle such as friction braking means and optionally regenerative braking means. Thus, a deceleration force on the vehicle induced by engine turnover when the engine is coupled to the driveline is usefully employed to provide braking at a time when the driver demands and therefore expects a deceleration force to be imposed on the vehicle.

Advantageously the vehicle may be operable by the control system to vary an amount of torque required to motor the engine by means of an engine gas inlet valve or an engine gas outlet valve. The inlet valve and/or the outlet valve may be existing valves already present in an engine (for example the inlet valve may correspond to a throttle valve of an engine). In some embodiments one or both valves are provided expressly for controlling engine braking torque when the engine is motored.

Control of an inlet and/or outlet valve has the advantage that if the engine is cold, the system may simulate the braking action provided by a warm engine, which is typically less than that provided by a cold engine, for example due to increased friction and/or viscous drag, for example by fully or at least partially opening both valves. It is to be understood that a throttle valve may normally be placed in a substantially closed position when an engine is switched off, restricting flow of air into the engine.

Optionally, the engine has a gas inlet valve and the control system is operable to open the gas inlet valve before the engine is coupled to the driveline, the control system being operable to at least partially close the gas inlet valve when the engine is coupled to the driveline to increase the amount of torque required to motor the engine.

This feature has the advantage that it allows a reduction in NVH associated with connection of the engine to the driveline, because the amount of torque required to accelerate the engine to driveline speed is reduced. Furthermore, the amount of braking torque that may be applied to the driveline without the use of a regenerative braking system or a friction braking system may be increased following connection of the engine to the driveline by at least partially closing the inlet valve. In some embodiments the inlet valve may be substantially fully closed. In some embodiments the control system may be operable to substantially fully close the inlet valve.

Optionally the vehicle is operable to close the inlet valve when the engine is motored by an amount dependent on an amount of required engine braking torque.

Further optionally the engine has a gas outlet valve and the control system is operable to open the gas outlet valve before the engine is coupled to the driveline, the control system being operable to at least partially close the gas outlet valve when the engine is coupled to the driveline to increase the amount of torque required to motor the engine.

This feature has the advantage that it may enable a reduction in NVH associated with connection of the engine to the driveline. This is because the amount of torque required to accelerate the engine to driveline speed is reduced. Furthermore, the amount of braking torque that may be applied to the driveline without the use of a regenerative braking system or a friction braking system may be increased following connection of the engine to the driveline by at least partially closing the outlet valve, optionally substantially fully closing the outlet valve.

The vehicle may be operable to close the outlet valve when the engine is motored by an amount dependent on an amount of required engine braking torque.

It is to be understood that motoring of the engine to apply brake torque to the driveline may be employed to simulate engine braking or engine 'overrun' braking, even when a driver has not depressed a brake pedal. Overrun braking torque under these circumstances may be sufficient to simulate the brake torque that would be achieved under comparable conditions of speed and selected gear with the engine switched on and burning fuel.

In an embodiment, the prescribed one or more conditions include the condition that the driver is demanding a brake torque.

Thus the control system may be operable to cause the engine to rotate without starting in dependence on driver demand for braking torque thereby to cause braking of the vehicle.

Optionally the prescribed one or more conditions include the condition that the at least one electric machine is not providing positive torque to drive the vehicle. That is, the electric machine is not developing a positive torque as opposed to a negative torque, a negative torque being a torque that may cause deceleration of the vehicle.

The prescribed one or more conditions may include at least one condition selected from amongst the conditions that the engine has not been rotated for a prescribed time period, the vehicle has travelled at least a prescribed distance since the engine was last rotated, a pressure of fuel in a fuel line of the vehicle has fallen below a prescribed value, an average value of air temperature is below a prescribed value, an average value of air temperature is above a prescribed value, an actual air temperature is below a prescribed value, an actual air temperature is above a prescribed value, an age of the vehicle exceeds a prescribed value, an age of the engine exceeds a prescribed value, a total distance travelled by the vehicle exceeds a prescribed value and an engine mileage exceeds a prescribed value.

In some embodiments, by engine mileage is meant a distance travelled by the vehicle with that engine fitted. In some embodiments by engine mileage is meant a distance travelled by the vehicle with the engine either motoring or running (i.e. burning fuel). In some embodiments by engine mileage is meant a distance travelled by the vehicle only with the engine running (i.e. burning fuel).

It is to be understood that in some situations NVH associated with motoring of the engine may be masked at least in part by vehicle road noise.

Some embodiments of the invention provide a motor vehicle control system operable to cause the engine of a vehicle to rotate without starting (i.e. to be motored) thereby to cause braking of the vehicle when braking is required. Thus the engine may be employed to provide useful braking due to compression of gases in cylinders thereof and/or frictional or inertial forces thereby to slow the vehicle. In some embodiments the control system commands that the engine is connected to the driveline of the vehicle, for example by means of a clutch, in order to cause braking of the vehicle.

Some embodiments of the invention have the advantage that noise, vibration or harshness (NVH) induced due to rotation of the engine may be masked by the braking action provided by the engine. The braking action may be provided in addition to or instead of one or more other braking means of the vehicle such as friction braking means and optionally regenerative braking means.

Application of brake torque by motoring of the engine may be particularly useful in circumstances where the amount of brake torque available by means of a regenerative braking system is insufficient to meet an amount of brake torque required at a given moment in time. For example, where a traction battery or other energy storage device is unable to receive regenerative braking energy, for example where the battery state of charge (SoC) exceeds a prescribed value, motoring of the engine may allow the required brake torque to be met without the use of friction brakes. In some embodiments motoring of the engine may allow the required brake torque to be met with reduced use of friction brakes.

It is to be understood that the amount of brake torque available by means of a regenerative braking system may be reduced for a number of reasons. For example the temperature of one or more electric machines operable as generators may exceed a prescribed value necessitating derating of the machine or rendering the machine unserviceable for a period of time. Furthermore, a fault associated with an electric machine may render the machine unserviceable. In such circumstances, an ability to employ engine braking by motoring the engine to compensate for reduced or no regenerative braking capability may be helpful in reducing use of friction braking when such conditions prevail.

Advantageously the vehicle may be operable by the control system to vary an amount of torque required to motor the engine by means of an engine gas inlet valve or an engine gas outlet valve.

Optionally, the engine has a gas inlet valve and the control system is operable to open the gas inlet valve before the engine is coupled to the driveline, the control system being operable to at least partially close the gas inlet valve when the engine is coupled to the driveline to increase the amount of torque required to motor the engine.

Optionally the vehicle is operable to close the inlet valve when the engine is motored by an amount dependent on an amount of required engine braking torque.

Further optionally the engine has a gas outlet valve and the control system is operable to open the gas outlet valve before the engine is coupled to the driveline, the control system being operable to at least partially close the gas outlet valve when the engine is coupled to the driveline to increase the amount of torque required to motor the engine.

The vehicle may be operable to close the outlet valve when the engine is motored by an amount dependent on an amount of required engine braking torque.

It is to be understood that motoring of the engine to apply brake torque to the driveline may be employed to simulate engine braking or engine 'overrun' braking, even when a driver has not depressed a brake pedal. Overrun braking torque under these circumstances may be sufficient to simulate the brake torque that would be achieved under comparable conditions of speed and selected gear with the engine switched on and burning fuel.

In an embodiment, the prescribed one or more conditions include the condition that the driver is demanding a brake torque.

Thus the control system may be operable to cause the engine to rotate without starting (i.e. to be motored) in dependence on driver demand for braking torque thereby to cause braking of the vehicle.

Optionally the prescribed one or more conditions include the condition that the at least one electric machine is not providing positive torque to drive the vehicle. That is, the electric machine is not developing a positive torque as opposed to a negative torque, a negative torque being a torque that may cause deceleration of the vehicle.

The prescribed one or more conditions may include at least one condition selected from amongst the conditions that the engine has not been rotated for a prescribed time period, the vehicle has travelled at least a prescribed distance since the engine was last rotated, a pressure of fuel in a fuel line of the vehicle has fallen below a prescribed value, an average value of air temperature is below a prescribed value, an average value of air temperature is above a prescribed value, an actual air temperature is below a prescribed value, an actual air temperature is above a prescribed value, an age of the vehicle exceeds a prescribed value, an age of the engine exceeds a prescribed value, a total distance travelled by the vehicle exceeds a prescribed value and an engine mileage exceeds a prescribed value.

The system may be operable to apply torque to motor the engine without starting the engine by connecting the engine to the driveline when it is required to apply brake torque to the driveline and at least one further condition is met.

The at least one further condition may be selected from amongst the conditions that the engine has not been rotated for a prescribed time period, the vehicle has travelled at least a prescribed distance since the engine was last rotated, a pressure of fuel in a fuel line of the vehicle has fallen below a prescribed value, an average value of air temperature is below a prescribed value, an average value of air temperature is above a prescribed value, an actual air temperature is below a prescribed value, an actual air temperature is above a prescribed value, an age of the vehicle exceeds a prescribed value, an age of the engine exceeds a prescribed value, a total distance travelled by the vehicle exceeds a prescribed value and an engine mileage exceeds a prescribed value.

### BRIEF DESCRIPTION OF THE DRAWINGS

Embodiments of the invention will now be described, by way of example only, with reference to the accompanying figure in which:
FIGURE 1 is a schematic illustration of a hybrid electric vehicle according to an embodiment of the present invention; and
FIGURE 2 is a schematic illustration of the relative amounts of regenerative braking and engine braking employed to obtain a particular value Tq1 of brake torque Tq as a function of battery SoC in a brake control strategy employed in a vehicle according to an embodiment of the present invention.

### DETAILED DESCRIPTION

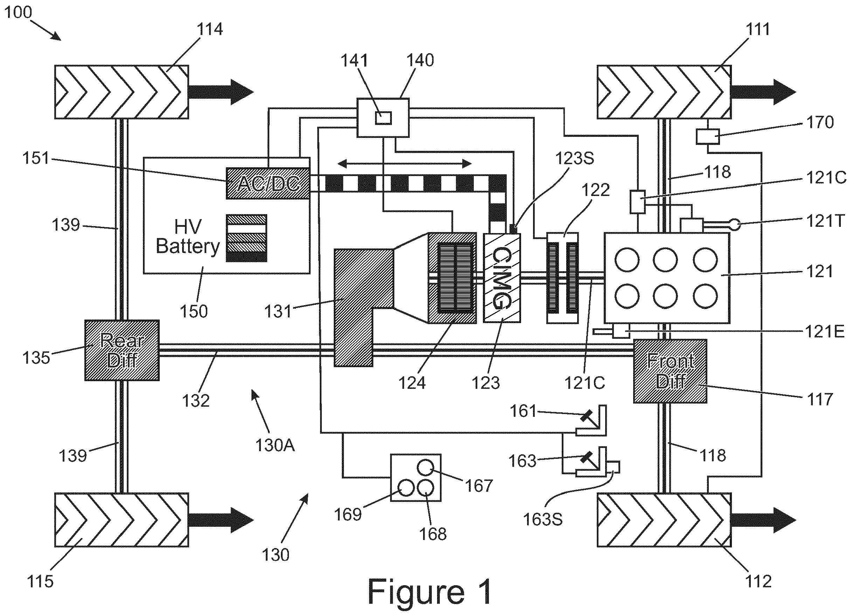

In one embodiment of the invention a parallel-type hybrid electric vehicle (HEV) 100 is provided as shown in FIG. 1. The vehicle 100 has an internal combustion engine 121 releasably coupled to a crankshaft integrated motor/generator (CIMG) 123 by means of a clutch 122. The CIMG 123 is in turn coupled to an automatic transmission 124. The vehicle 100 is operable to provide drive torque to the transmission 124 by means of the engine 121 alone, the CIMG 123 alone or the engine 121 and CIMG 123 in parallel.

It is to be understood that in some embodiments the transmission 124 may be a manual transmission instead of an automatic transmission. The transmission may comprise a manual gearbox, a continually variable transmission or any other suitable transmission.

The transmission 124 is connected to a driveline 130 arranged to drive a pair of front wheels 111, 112 of the vehicle 100 by means of a front differential 117 and a pair of front drive shafts 118. The driveline 130 also comprises an auxiliary driveline 130A arranged to drive a pair of rear wheels 114, 115 by means of auxiliary driveshaft 132, a rear differential 135 and a pair of rear driveshafts 139.

It is to be understood that embodiments of the present invention are suitable for use with vehicles in which the transmission 124 is arranged to drive only a pair of front wheels 111, 112 or only a pair of rear wheels 114, 115, i.e. front wheel drive or rear wheel drive vehicles in addition to all wheel drive or selectable two wheel drive/four wheel drive vehicles. Embodiments of the invention are also suitable for vehicles having less than four wheels or more than four wheels.

The vehicle 100 has a battery 150 connected to an inverter 151 that generates a three-phase electrical supply that is supplied to the CIMG 123 when the CIMG 123 is operated as a motor. The battery 150 is arranged to receive charge from the CIMG 123 when the CIMG 123 is operated as a generator.

The vehicle 100 has a brake pedal 161, an accelerator pedal 163, a transmission selector control 167 and an 'attribute mode' or 'special programs' (SP) mode selector 168.

The vehicle 100 is configured to operate in either one of a hybrid electric vehicle (HEV) mode, a HEV inhibit mode and a selectable electric vehicle only (EV-only) mode according to the state of a HEV mode selector 169.

In the HEV mode of operation the vehicle 100 is arranged to operate either in a 'parallel' mode with the engine 121 and CIMG 123 both connected to the transmission 124 (i.e. clutch 122 is closed) or in a vehicle-selected EV mode. In the vehicle-selected EV mode (and in the driver selected EV-only mode) the clutch 122 is opened and the engine 121 is switched off.

When the vehicle 100 is in the HEV mode the vehicle 100 is configured automatically to determine whether to operate with the engine 121 switched on or off. When the vehicle 100 is in HEV mode and the driver has selected operation in driver-selected EV-only mode, restarting of the engine 121 may be performed according to a value of driver demanded torque and a state of charge (SoC) of the battery 150 although other arrangements are also useful.

It is to be understood that restarting of the engine 121 may be performed if the value of driver demanded torque exceeds a value that can be met by the CIMG 123 alone, requiring torque boost from the engine 121. Similarly restarting of the engine 121 may be performed if the battery SoC falls below to a minimum allowable value.

In some embodiments, when in driver-selected EV-only mode the engine 121 is prevented from turning on regardless of the value of driver demanded torque.

If the driver selects operation of the vehicle 100 in EV-only mode whilst the engine 121 is running, the vehicle 100 is configured to open the clutch 122 and to switch off the engine 121. The CIMG 123 is then operated either as a motor or as a generator according to the value of driver-demanded torque. For example, it is to be understood that the CIMG 123 may be arranged to act as a generator in the EV-only mode in order to effect regenerative braking of the vehicle 100 in the event the driver demands a negative torque to be applied to the driveline.

In some embodiments the vehicle 100 is configured only to assume EV-only mode when travelling below a prescribed speed.

If whilst in driver-selected EV mode the driver places a positive torque demand on the vehicle (by depressing the accelerator pedal 163) that cannot be met by the CIMG 123 alone, the vehicle 100 may be configured to start the engine 121 so as to provide torque boost to drive the vehicle 100 in parallel with the CIMG 123.

The vehicle 100 has a controller 140 arranged to control the vehicle 100 to switch the engine 121 on and off (by means of an engine controller 121C) when in HEV mode according to an energy management strategy. The controller 140 includes a powertrain control module (PCM).

The vehicle 100 is configured to monitor a time period since the engine 121 was last switched off. If the time period exceeds a prescribed value, the vehicle 100 is configured to force the engine 121 to turn over when the driver next depresses the brake pedal 163 and demands a braking torque that exceeds a prescribed amount.

The vehicle 100 forces the engine 121 to turn over by closing the clutch 122 by an amount sufficient to cause the engine 121 to rotate. Once the engine 121 has been turned over by a sufficient amount the clutch 122 is fully opened again and engine turnover terminated.

It is to be understood that by performing engine turnover whilst the vehicle 100 is braking, NVH associated with the engine turnover operation may be masked and therefore a driver is less likely to be aware that engine turnover is being performed. Furthermore, torque (and therefore energy) required to cause the engine 121 to turn over may be drawn from the driveline 130 thereby providing an advantageous braking action. Torque to turn the engine 121 therefore does not need to be generated by the CIMG 123 acting as a motor. This reduces drain of charge from the battery 150, preserving battery SoC.

Furthermore, the ability to employ the engine 121 to provide braking in addition to regenerative braking by means of the CIMG 124 increases the amount of brake torque that may be made available without the use of friction brakes of the vehicle 100.

It is to be understood that typical battery systems have a larger maximum discharge current capacity than their maximum charging current capacity, which may be small in comparison with the discharge current capacity.

In some systems it is found that the charging current capacity of the battery at a given moment in time is lower than the maximum current generated during regenerative braking. The amount of regenerative braking torque available may be limited by the ability of the battery to receive charging current. Where the amount of regenerative braking torque is reduced, friction braking may be employed to supplement the regenerative braking torque. Accordingly, embodiments of the present invention enable a reduction in the amount of required friction braking by using the engine 121 to provide brake torque even when the engine 121 is switched off and the vehicle 100 is operating in EV mode. Not only is the required amount of friction braking reduced, but motoring of the engine 121 is useful where the engine 121 has not been turned over for some time.

In some embodiments, when it is required to effect engine turnover, an air inlet valve 121T of the engine 121 is opened prior to closing the clutch 122. This is so as to reduce the amount of torque that is required to be applied to the engine 121 in order to spin the engine 121 up to a speed matching that of the driveline 130. This feature is helpful in reducing NVH associated with initial spinning up of the engine 121 upon closure of the clutch 122.

In the present embodiment the air inlet valve 121T is a throttle valve 121T, although other arrangements are also useful.

In the embodiment of FIG. 1, the amount of available engine braking torque may be further increased by restricting a flow of intake gas out from the engine 121 via an engine exhaust outlet valve 121E.

In the embodiment of FIG. 1 the controller 140 is operable to adjust the amount of torque required to motor the engine 121 by adjusting both the throttle valve 121T and the exhaust outlet valve 121E to control the rate at which intake gases may flow into and out from the engine 121, respectively.

In a typical mode of operation, when the controller 140 determines that the engine 121 has not been started or turned over for a prescribed period of time, the controller 140 sets a flag indicating that engine turnover is required. Unless the engine 121 is started in the meantime, when the controller 140 next determines that it is necessary to apply braking torque to the driveline 130, either in response to driver demand for brake torque upon depressing the brake pedal 161 or in response to tip-out, the controller 140 commands opening of the throttle valve 121T and exhaust outlet valve 121E. The controller 140 then commands closure of clutch 122.

It is to be understood that the amount of torque that may be applied to the driveline 130 with the engine motoring and with the throttle and exhaust valves 121T, 121E open may be relatively small. If the controller 140 determines that a larger amount of engine braking torque is required than that which is available with the throttle and exhaust outlet valves 121T, 121E closed, the controller 140 first commands the throttle valve 121T to close. The amount by which the throttle valve 121T is closed may be controlled according to the amount of braking torque required. If the amount of braking torque is still insufficient with the throttle valve 121T closed, the controller 140 commands the exhaust outlet valve 121E to close. Again, the amount by which the exhaust outlet valve 121E is closed may be controlled according to the amount of braking torque required.

If the maximum amount of braking torque available by motoring of the engine 121 is still insufficient to meet the required amount, regenerative braking and/or friction braking may be employed to supplement the engine braking torque.

In some embodiments, braking torque developed whilst the engine is motoring may be applied in combination with regenerative braking when it is required to motor the engine 121.

It is to be understood that the controller 140 is configured to ensure that a crankshaft 121C of the engine 121 rotates by a prescribed number of revolutions when engine turnover due to lack of use of the engine 121 is required. The prescribed number of revolutions may be determined by a manufacturer according to a requirement of a given engine. Typically the number of revolutions may be any suitable number such as from 1 to around 10, from 5 to around 20, from 1 to around 100, 500, 1000 or any other suitable number.

Whilst the engine 121 is turning over, the vehicle 100 performs a set of checks to ensure the engine 121 is operating correctly. The checks are (1) a fuel pressure check; and (2) a crankshaft position verification check.

The first check verifies that the pressure of fuel in a fuel rail (or other conduit) of the engine 121 exceeds a prescribed value within a prescribed time period of commencing engine turnover. If the fuel pressure does not exceed the respective prescribed value within the prescribed period the vehicle 100 may determine that a fault exists.

The second check is employed to refresh data stored in a memory of the controller 140 in respect of the rotational position of a crankshaft of the engine 121. It is to be understood that the vehicle 100 requires to know the rotational position of the crankshaft with respect to a reference position in order to determine the position of pistons of the engine 121. This is so that when the engine 121 is started the engine controller 121C is able to determine when to open inlet and outlet valves of the engine 121 and when to inject fuel into cylinders of the engine 121. This second check is performed as the crankshaft rotates whilst the engine is turning over.

By performing the second check the vehicle 100 is placed in a condition in which the engine 121 may be started more quickly when a decision is made to start the engine 121.

Thus if the driver finds himself in a situation in which he suddenly requires torque boost from the engine 121, the engine 121 may be started relatively quickly when the driver requests a sufficiently high torque from the engine 121. This is in contrast to known vehicles in which engine turnover whilst operating in EV mode is not performed. It is to be understood that in such vehicles a much greater delay may be experienced between the moment a driver requests the higher torque value and the time from which the engine develops torque to provide torque boost.

In some embodiments an oil pressure check may be performed whilst the engine 121 is turning in addition to or instead of a fuel pressure check. Other checks are also useful.

Embodiments of the invention have the advantage that it is not necessary for the engine 121 actually to be started and to develop torque by burning fuel in order to maintain the engine 121 in a state of readiness for starting. Rather, the engine 121 may be maintained in a state of readiness by turning over the engine without actually starting the engine.

It is to be understood that in some embodiments the engine 121 may be turned over by operating the CIMG 123 as a motor whilst the clutch 122 is closed and an internal clutch of the transmission 124 open, disconnecting the transmission 124 from the driveline 130.

In some embodiments engine turnover may be performed when the vehicle has travelled a prescribed distance without the engine being switched on, in addition to or instead of when a prescribed time period has elapsed since the engine was last switched off.

In some embodiments, engine turnover is performed when it is detected that a pressure of fuel associated with the engine has fallen below a prescribed value. This has the advantage that an amount of time required in order to start the engine may be kept relatively low regardless of an environment in which the vehicle is operating.

It is to be understood that in certain climatic conditions (such as relatively hot conditions) a drop in pressure of fuel may be relatively rapid due for example to leakage or vaporisation of fuel. Accordingly, the vehicle may be configured to maintain the fuel pressure at or above a prescribed value. The pressure may be a pressure of fuel in a fuel rail of the engine.

In some embodiments, as noted above, when the vehicle determines that an engine turnover event is required the vehicle is configured to wait for a suitable opportunity to perform the turnover operation. The turnover operation may be performed when the electric machine 123 is not providing positive torque to drive the vehicle 100 so that motive power is not used to perform the turnover operation. This reduces a drain on the battery 150 during operation in EV mode.

Embodiments of the invention have the advantage that deterioration of one or more components of an engine may be reduced by performing engine turnover, thereby refreshing a coating of oil on a component. Furthermore, one or more diagnostic checks may be performed, allowing detection of faults. One or more re-calibration operations may be performed in addition or instead, enabling more rapid restarting of an engine when it is required to do so.

It is to be understood that embodiments of the invention may have further advantages and benefits associated therewith.

In some embodiments of the invention, in addition to commanding turnover or motoring of the engine 121 when the engine 121 has not been used for a prescribed time period, the controller 140 may be operable to command connection of the engine 121 to the driveline 130 and motoring of the engine 121 to provide braking action when braking action is required even when the engine has recently been motored or operated burning fuel. The controller 140 may command motoring of the engine to provide braking action (i.e. the application of brake torque to one or more wheels) in response to driver depression of a brake pedal 161 or in response to a decrease in driver demanded torque to simulate engine braking where required.

In some alternative embodiments the controller of a hybrid electric vehicle may be operable to motor the engine to provide engine braking according to a brake control strategy and not to command engine turnover or motoring in dependence on engine usage. The brake control strategy may be implemented in combination with a brake controller. The controller may be configured to provide engine braking without starting of the engine to supplement regenerative braking when a battery state of charge exceeds a prescribed value and/or when an amount of brake torque that may be generated by an electric machine is below a prescribed value. Other arrangements are also useful.

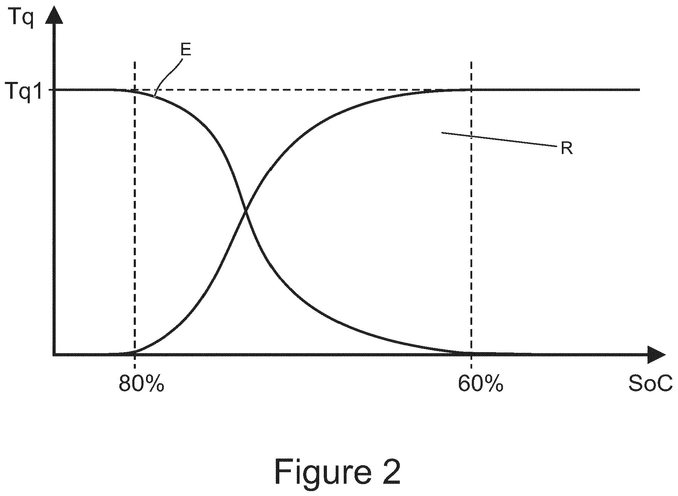

FIG. 2 shows schematically the relative amounts of regenerative braking torque (trace R) and engine braking torque (trace E) employed to obtain a particular value Tq1 of brake torque Tq as a function of battery SoC in a brake control strategy employed in a vehicle according to an embodiment of the present invention. The strategy illustrated is employed when the vehicle is operating in EV mode. The value of Tq1 corresponds to the maximum available regenerative brake torque when the battery is in a condition to receive a maximum charging current. In the particular embodiment illustrated maximum charging current capacity is available when the battery SoC is below 60% although other values may prevail in some embodiments. The maximum allowable battery SoC in the embodiment shown is 80%. Once the SoC reaches this value regenerative braking is no longer permitted in this particular embodiment.

It can be seen that, when the battery SoC is greater than or substantially equal to 80% the braking torque is provided substantially entirely by motoring of the engine. As the battery SoC falls to 60%, the amount of regenerative braking capacity increases to a maximum value. The amount of engine brake torque required to compensate for the decrease in available regenerative braking torque therefore decreases substantially to zero.

The form of the decrease in available regenerative brake torque with increasing battery SoC may vary from one embodiment to another and may in some embodiments be substantially linear although other arrangements are also useful.

It is to be understood that some embodiments may employ a brake control strategy in which regenerative braking is performed in preference to friction braking and engine braking. Where regenerative braking alone is unable to meet required brake torque, engine braking may be employed to supplement or replace regenerative brake torque. Where engine braking with any available regenerative braking is unable sufficiently to meet the required brake torque, friction braking may be employed in addition or instead.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A control system for a hybrid electric vehicle (HEV) (100) having an engine (121) and at least one electric machine (123), the vehicle (100) being operable in an electric vehicle (EV) mode in which the electric machine (123) develops torque to drive the vehicle (100) whilst the engine (121) is switched off, the control system being operable when the vehicle (100) is in EV mode to command the vehicle (100) to apply torque to the engine (121) to motor the engine (121) without starting the engine (121) when one or more conditions are met, the control system being operable to command recalibration of a rotational position of an engine crankshaft (121C) when the engine (121) is rotated without starting.

2. A control system as claimed in claim 1, operable to command at least one engine diagnostic test to be performed when the engine (121) is rotated without starting in EV mode.

3. A control system as claimed in claim 1 or claim 2, operable to apply torque to the engine (121) to motor the engine (121) without starting the engine (121) by means of an engine starter motor, the at least one electric machine (123) or, by coupling the engine (121) to a driveline (130) of the vehicle (100), advantageously whilst the vehicle (100) is moving and wherein the control system is operable to control an amount of torque required to motor the engine (121) by means of an engine gas inlet valve (121T) or an engine gas outlet valve (121E).

4. A control system as claimed in claim 1 4- wherein the engine (121) has a gas inlet valve (121T) and the control system is operable to command opening of the gas inlet valve (121T) before the engine (121) is coupled to the driveline (130), the control system being operable to command at least partial closure of the gas inlet valve (121T) when the engine (121) is coupled to the driveline (130) to increase the amount of torque required to motor the engine (121), optionally wherein the control system is operable to command closure of the inlet valve (121T) when the engine (121) is motored by an amount dependent on an amount of required engine braking torque.

5. A control system as claimed in claim 3 or 4, wherein the engine (121) has a gas outlet valve (121E) and the control system is operable to command opening of the gas outlet valve (121E) before the engine (121) is coupled to the driveline (130), the control system being operable to at least partially close the gas outlet valve (121E) when the engine (121) is coupled to the driveline (130) to increase the amount of torque required to motor the engine (121), optionally wherein the control system is operable to command closure of the outlet valve (121E) when the engine (121) is motored by an amount dependent on an amount of required engine braking torque.

6. A control system as claimed in any preceding claim operable to cause the engine (121) to rotate without starting in dependence on driver demand for braking torque thereby to cause braking of the vehicle (100).

7. A control system as claimed in any preceding claim wherein the prescribed one or more conditions include the condition that the driver is demanding brake torque.

8. A control system as claimed in any preceding claim wherein the prescribed one or more conditions include the condition that the at least one electric machine (123) is not providing positive torque to drive the vehicle (100).

9. A control system as claimed in any preceding claim wherein the prescribed one or more conditions include at least one condition selected from amongst the conditions that the engine (121) has not been rotated for a prescribed time period, the vehicle (100) has travelled at least a prescribed distance since the engine (121) was last rotated, a pressure of fuel in a fuel line of the vehicle (100) has fallen below a prescribed value, an average value of air temperature is below a prescribed value, an average value of air temperature is above a prescribed value, an actual air temperature is below a prescribed value, an actual air temperature is above a prescribed value, an age of the vehicle (100) exceeds a prescribed value, an age of the engine (121) exceeds a prescribed value, a total distance travelled by the vehicle (100) exceeds a prescribed value and an engine mileage exceeds a prescribed value.

10. A hybrid electric vehicle (100) comprising a control system as claimed in any preceding claim.

11. A method of controlling a hybrid electric vehicle (HEV) (100) having an engine (121) and at least one electric machine (123) by means of a control system, the HEV (100) being operable in an electric vehicle (EV) mode in which the engine (121) is switched off and the at least one electric machine (123) develops torque to drive the vehicle (100), the method comprising applying torque to the engine (121) to motor the engine (121) without starting whilst the vehicle (100) is operating in EV mode when a prescribed one or more conditions are met, and recalibrating a rotational position of a crankshaft (121C) of the engine (121) when the engine (121) is rotated without starting.

12. A method as claimed in claim 11 comprising the step of performing at least one diagnostic test when the engine (121) is rotated without starting in EV mode.

13. A method as claimed in claim 11 or claim 12, wherein coupling the engine (121) to a driveline (130) of the vehicle (100) whilst the vehicle (100) is moving, an engine starter motor or the at least one electric machine (123) causes the engine (121) to rotate without starting and the method comprises controlling an amount of torque required to motor the engine (121) by means of an engine gas inlet valve (121T) or an engine gas outlet valve (121E).

14. A method as claimed in any one of claims 11 to 13 comprising the step of causing the engine (121) to rotate without starting in order to cause braking.

15. A method as claimed in any one of claims 11 to 14 wherein the prescribed one or more conditions include at least one condition selected from amongst the conditions that the driver is demanding a braking action, the at least one electric machine (123) is not providing positive torque to drive the vehicle (100), the engine (121) has not been rotated for a prescribed time period, the vehicle (100) has travelled at least a prescribed distance since the engine (121) was last rotated and a pressure of fuel in a fuel line of the vehicle (100) has fallen below a prescribed value.

## Patentansprüche

1. Steuersystem für ein Hybridelektrofahrzeug (hybrid electric vehicle - HEV) (100), das einen Motor (121) und wenigstens eine elektrische Maschine (123) aufweist, wobei das Fahrzeug (100) in einem Elektrofahrzeug(electric vehicle - EV)-Modus betriebsfähig ist, in dem die elektrische Maschine (123) ein Drehmoment entwickelt, um das Fahrzeug (100) anzutreiben, während der Motor (121) ausgeschaltet ist, wobei das Steuersystem betriebsfähig ist, wenn das Fahrzeug (100) in dem EV-Modus ist, um dem Fahrzeug (100) zu befehlen, ein Drehmoment auf den Motor (121) zu übertragen, um den Motor (121) zu treiben, ohne den Motor (121) zu starten, wenn eine oder mehrere Bedingungen erfüllt sind, wobei das Steuersystem betriebsfähig ist, um eine Rekalibrierung einer Rotationsposition einer Motorkurbelwelle (121) zu befehlen, wenn der Motor (121) ohne Starten rotiert wird.

2. Steuersystem nach Anspruch 1, das betriebsfähig ist, um zu befehlen, das wenigstens ein Motordiagnosetest durchgeführt wird, wenn der Motor (121) ohne Starten in dem EV-Modus rotiert wird.

3. Steuersystem nach Anspruch 1 oder 2, das betriebsfähig ist, um das Drehmoment auf den Motor (121) zu übertragen, um den Motor (121) zu treiben, ohne den Motor (121) mittels eines Motorstarters, der wenigstens einen elektrischen Maschine (123) oder durch Koppeln des Motors (121) mit einem Antriebsstrang (130) des Fahrzeugs (100), vorteilhafterweise während sich das Fahrzeug (100) bewegt, zu starten, und wobei das Steuersystem betriebsfähig ist, um einen Drehmomentbetrag zu steuern, der erforderlich ist, um den Motor (121) mittels eines Motorgaseinlassventils (121T) oder eines Motorgasauslassventils (121E) zu treiben.

4. Steuersystem nach Anspruch 1, wobei der Motor (121) ein Gaseinlassventil (121T) aufweist und das Steuersystem betriebsfähig ist, um ein Öffnen des Gaseinlassventils (121T) zu befehlen, bevor der Motor (121) mit dem Antriebsstrang (130) gekoppelt wird, wobei das Steuersystem betriebsfähig ist, um ein wenigstens teilweises Schließen des Gaseinlassventils (121T) zu befehlen, wenn der Motor (121) mit dem Antriebsstrang (130) gekoppelt wird, um den Drehmomentbetrag zu erhöhen, der erforderlich ist, um den Motor (121) zu treiben, optional wobei das Steuersystem betriebsfähig ist, um das Schließen des Einlassventils (121T) zu befehlen, wenn der Motor (121) durch einen Betrag getrieben wird, der von einem Betrag eines erforderlichen Motorbremsdrehmoments abhängig ist.

5. Steuersystem nach einem der Ansprüche 3 bis 4, wobei der Motor (121) ein Gasauslassventil (121E) aufweist und das Steuersystem betriebsfähig ist, um das Öffnen des Gasauslassventils (121E) zu befehlen, bevor der Motor (121) mit dem Antriebsstrang (130) gekoppelt wird, wobei das Steuersystem betriebsfähig ist, um das Gasauslassventil (121E) wenigstens teilweise zu schließen, wenn der Motor (121) mit dem Antriebsstrang (130) gekoppelt wird, um den Drehmomentbetrag zu erhöhen, der erforderlich ist, um den Motor (121) zu treiben, optional wobei das Steuersystem betriebsfähig ist, um das Schließen des Auslassventils (121E) zu befehlen, wenn der Motor (121) durch einen Betrag getrieben wird, der von einem Betrag des erforderlichen Motorbremsmoments abhängig ist.

6. Steuersystem nach einem der vorhergehenden Ansprüche, das betriebsfähig ist, um zu bewirken, dass der Motor (121) ohne Starten in Abhängigkeit von einer Fahreranforderung für ein Bremsmoment rotiert, wobei dadurch ein Bremsen des Fahrzeugs (100) bewirkt wird.

7. Steuersystem nach einem der vorhergehenden Ansprüche, wobei die eine oder die mehreren vorgegebenen Bedingungen die Bedingung beinhalten, dass der Fahrer das Bremsmoment anfordert.

8. Steuersystem nach einem der vorhergehenden Ansprüche, wobei die eine oder die mehreren vorgegebenen Bedingungen die Bedingung beinhalten, dass die wenigstens eine elektrische Maschine (123) kein positives Drehmoment bereitstellt, um das Fahrzeug (100) anzutreiben.

9. Steuersystem nach einem der vorhergehenden Ansprüche, wobei die eine oder die mehreren vorgegebenen Bedingungen wenigstens eine Bedingung beinhalten, die aus den Bedingungen ausgewählt ist, dass der Motor (121) für eine vorgegebene Zeitdauer nicht rotiert wurde, das Fahrzeug (100) wenigstens eine vorgegebene Distanz zurückgelegt hat, seit der Motor (121) zuletzt rotiert wurde, ein Kraftstoffdruck in einer Kraftstoffleitung des Fahrzeugs (100) unter einen vorgegebenen Wert gefallen ist, ein Durchschnittswert einer Lufttemperatur unter einem vorgegebenen Wert liegt, ein Durchschnittswert der Lufttemperatur über einem vorgegebenen Wert liegt, eine tatsächliche Lufttemperatur unter einem vorgegebenen Wert liegt, eine tatsächliche Lufttemperatur über einem vorgegebenen Wert liegt, ein Alter des Fahrzeugs (100) einen vorgegebenen Wert überschreitet, ein Alter des Motors (121) einen vorgegebenen Wert überschreitet, eine durch das Fahrzeug (100) zurückgelegte Gesamtdistanz einen vorgegebenen Wert überschreitet und eine Motorlaufleistung einen vorgegebenen Wert überschreitet.

10. Hybridelektrofahrzeug (100), das ein Steuersystem nach einem der vorhergehenden Ansprüche umfasst.

11. Verfahren zum Steuern eines Hybridelektrofahrzeugs (HEV) (100), das einen Motor (121) und wenigstens eine elektrische Maschine (123) aufweist, mittels eines Steuersystems, wobei das HEV (100) in einem Elektrofahrzeug(EV)-Modus betriebsfähig ist, in dem der Motor (121) ausgeschaltet ist und die wenigstens eine elektrische Maschine (123) ein Drehmoment entwickelt, um das Fahrzeug (100) anzutreiben, wobei das Verfahren das Übertragen des Drehmoments auf den Motor (121), um den Motor (121) ohne Starten zu treiben, während das Fahrzeug (100) in dem EV-Modus betrieben wird, wenn eine oder mehrere vorgegebene Bedingungen erfüllt sind, und ein Rekalibrieren einer Rotationsposition einer Motorkurbelwelle (121C) des Motors (121) umfasst, wenn der Motor (121) ohne Starten rotiert wird.

12. Verfahren nach Anspruch 11, das den Schritt des Durchführens wenigstens eines Diagnosetests umfasst, wenn der Motor (121) rotiert wird, ohne in dem EV-Modus zu starten.

13. Verfahren nach Anspruch 11 oder 12, wobei das Koppeln des Motors (121) mit einem Antriebsstrang (130) des Fahrzeugs (100) während sich das Fahrzeug (100) bewegt, ein Motorstarter oder die wenigstens eine elektrische Maschine (123) bewirkt, dass der Motor (121) rotiert, ohne zu starten, und das Verfahren das Steuern eines Drehmomentbetrags, der erforderlich ist, um den Motor (121) zu treiben, mittels eines Motorgaseinlassventils (121T) oder eines Motorgasauslassventils (121E) umfasst.

14. Verfahren nach einem der Ansprüche 11 bis 13, das den Schritt des Bewirkens umfasst, dass der Motor (121) rotiert, ohne zu starten, um das Bremsen zu bewirken.

15. Verfahren nach einem der Ansprüche 11 bis 14, wobei die eine oder die mehreren gegebenen Bedingungen wenigstens eine Bedingung beinhalten, die aus den Bedingungen ausgewählt ist, dass der Fahrer eine Bremshandlung anfordert, die wenigstens eine elektrische Maschine (123) kein positives Drehmoment bereitstellt, um das Fahrzeug (100) anzutreiben, der Motor (121) für eine vorgegebene Zeitdauer nicht rotiert wurde, das Fahrzeug (100) wenigstens eine vorgegebene Distanz zurückgelegt hat, seit der Motor (121) zuletzt rotiert wurde, und ein Kraftstoffdruck in einer Kraftstoffleitung des Fahrzeugs (100) unter einen vorgegebenen Wert gefallen ist.

## Revendications

1. Système de commande pour un véhicule électrique hybride (HEV) (100) ayant un moteur (121) et au moins une machine électrique (123), le véhicule (100) pouvant fonctionner dans un mode de véhicule électrique (EV) dans lequel la machine électrique (123) développe un couple pour propulser le véhicule (100) tandis que le moteur (121) est éteint, le système de commande pouvant fonctionner lorsque le véhicule (100) est en mode d'EV pour commander au véhicule (100) d'appliquer un couple au moteur (121) pour entraîner le moteur (121) sans démarrer le moteur (121) lorsqu'une ou plusieurs conditions sont remplies, le système de commande pouvant fonctionner pour commander le réétalonnage d'une position de rotation d'un vilebrequin de moteur (121C) lorsque le moteur (121) est tourné sans démarrer.

2. Système de commande selon la revendication 1, pouvant fonctionner pour commander au moins un test de diagnostic de moteur à effectuer lorsque le moteur (121) est tourné sans démarrer en mode d'EV.

3. Système de commande selon la revendication 1 ou la revendication 2, pouvant fonctionner pour appliquer un couple au moteur (121) afin d'entraîner le moteur (121) sans démarrer le moteur (121) au moyen d'un démarreur de moteur, l'au moins une machine électrique (123) ou en accouplant le moteur (121) à une chaîne cinématique (130) du véhicule (100) de manière avantageuse tandis que le véhicule (100) se déplace, et le système de commande pouvant fonctionner pour commander une quantité de couple nécessaire pour entraîner le moteur (121) au moyen d'une soupape d'admission de gaz de moteur (121T) ou d'une soupape de refoulement de gaz de moteur (121E).

4. Système de commande selon la revendication 1, dans lequel le moteur (121) a une soupape d'admission de gaz (121T) et le système de commande peut fonctionner pour commander l'ouverture de la soupape d'admission de gaz (121T) avant que le moteur (121) ne soit accouplé à la chaîne cinématique (130), le système de commande pouvant fonctionner pour commander la fermeture au moins partielle de la soupape d'admission de gaz (121T) lorsque le moteur (121) est accouplé à la chaîne cinématique (130) pour augmenter la quantité de couple nécessaire pour entraîner le moteur (121), éventuellement, le système de commande pouvant fonctionner pour commander la fermeture de la soupape d'admission (121T) lorsque le moteur (121) est entraîné par une quantité dépendant d'une quantité de couple de freinage de moteur requis.

5. Système de commande selon la revendication 3 ou 4, dans lequel le moteur (121) a une soupape de refoulement de gaz (121E) et le système de commande peut fonctionner pour commander l'ouverture de la soupape de refoulement de gaz (121E) avant que le moteur (121) ne soit accouplé à la chaîne cinématique (130), le système de commande pouvant fonctionner pour fermer au moins partiellement la soupape de refoulement de gaz (121E) lorsque le moteur (121) est accouplé à la chaîne cinématique (130) pour augmenter la quantité de couple nécessaire pour entraîner le moteur (121), éventuellement, le système de commande pouvant fonctionner pour commander la fermeture de la soupape de refoulement (121E) lorsque le moteur (121) est entraîné par une quantité dépendant d'une quantité de couple de freinage de moteur requis.

6. Système de commande selon l'une quelconque des revendications précédentes, pouvant fonctionner pour amener le moteur (121) à tourner sans démarrer en fonction d'une demande de conducteur pour un couple de freinage pour ainsi amener le freinage du véhicule (100).

7. Système de commande selon l'une quelconque des revendications précédentes, dans lequel la ou les conditions prescrites comportent la condition selon laquelle le conducteur demande un couple de freinage.

8. Système de commande selon l'une quelconque des revendications précédentes, dans lequel la ou les conditions prescrites comportent la condition selon laquelle l'au moins une machine électrique (123) ne fournit pas de couple positif pour propulser le véhicule (100).

9. Système de commande selon l'une quelconque des revendications précédentes, dans lequel la ou les conditions prescrites comportent au moins une condition choisie parmi les conditions selon lesquelles le moteur (121) n'a pas été tourné pendant une période de temps prescrite, le véhicule (100) a parcouru au moins une distance prescrite depuis la dernière rotation du moteur (121), une pression de carburant dans une canalisation de carburant du véhicule (100) est tombée en dessous d'une valeur prescrite, une valeur moyenne de la température de l'air est inférieure à une valeur prescrite, une valeur moyenne de la température de l'air est supérieure à une valeur prescrite, une température de l'air réelle est inférieure à une valeur prescrite, une température de l'air réelle est supérieure à une valeur prescrite, un âge du véhicule (100) dépasse une valeur prescrite, un âge du moteur (121) dépasse une valeur prescrite, une distance totale parcourue par le véhicule (100) dépasse une valeur prescrite et un kilométrage de moteur dépasse une valeur prescrite.

10. Véhicule électrique hybride (100) comprenant un système de commande selon l'une quelconque des revendications précédentes.

11. Procédé de commande d'un véhicule électrique hybride (HEV) (100) ayant un moteur (121) et au moins une machine électrique (123) au moyen d'un système de commande, le HEV (100) pouvant fonctionner dans un mode de véhicule électrique (EV) dans lequel le moteur (121) est éteint et l'au moins une machine électrique (123) développe un couple pour propulser le véhicule (100), le procédé comprenant l'application d'un couple au moteur (121) pour entraîner le moteur (121) sans démarrer tandis que le véhicule (100) fonctionne en mode d'EV lorsqu'une ou plusieurs conditions prescrites sont remplies, et le réétalonnage d'une position de rotation d'un vilebrequin (121C) du moteur (121) lorsque le moteur (121) est tourné sans démarrer.

12. Procédé selon la revendication 11, comprenant l'étape consistant à effectuer au moins un test de diagnostic lorsque le moteur (121) est tourné sans démarrer en mode d'EV.

13. Procédé selon la revendication 11 ou la revendication 12, dans lequel l'accouplage du moteur (121) à une chaîne cinématique (130) du véhicule (100) tandis que le véhicule (100) se déplace, un démarreur de moteur ou l'au moins une machine électrique (123) amène le moteur (121) à tourner sans démarrer et le procédé comprend la commande d'une quantité de couple nécessaire pour entraîner le moteur (121) au moyen d'une soupape d'admission de gaz de moteur (121T) ou d'une soupape de refoulement de gaz de moteur (121E).

14. Procédé selon l'une quelconque des revendications 11 à 13, comprenant l'étape consistant à amener le moteur (121) à tourner sans démarrer afin d'amener un freinage.

15. Procédé selon l'une quelconque des revendications 11 à 14, dans lequel la ou les conditions prescrites comportent au moins une condition choisie parmi les conditions selon lesquelles le conducteur demande une action de freinage, l'au moins une machine électrique (123) ne fournit pas de couple positif pour propulser le véhicule (100), le moteur (121) n'a pas été tourné pendant une période de temps prescrite, le véhicule (100) a parcouru au moins une distance prescrite depuis la dernière rotation du moteur (121) et une pression de carburant dans une canalisation de carburant du véhicule (100) est tombée en dessous d'une valeur prescrite.
